# EUROPÄISCHE PATENTANMELDUNG

(11) **EP 3 045 251 A1**
(43) Veröffentlichungstag der Anmeldung: **20.07.2016**
(21) Anmeldenummer: 15198168.5
(22) Anmeldetag: 07.12.2015
(51) Int. Cl.: B23F 23/12, B24B 49/18, B24B 53/08

(54) **VERFAHREN ZUM KOMPENSIEREN VON TEMPERATURBEDINGTEN ABWEICHUNGEN IN EINER SCHLEIFMASCHINE UND ENTSPRECHEND AUSGESTATTETE SCHLEIFMASCHINE**

(30) Priorität: 13.01.2015 DE 102015100374
(71) Anmelder: Klingelnberg AG, 8050 Zürich (CH)
(72) Erfinder: Ribbeck, Karl-Martin, 42897 Remscheid (DE)
(74) Vertreter: Heusch, Christian

(57) **Zusammenfassung**

Es geht um ein Verfahren zum Kompensieren von temperaturbedingten Abweichungen in einer Schleifmaschine (100), die umfasst
• eine drehantreibbare Werkzeugspindel (11) mit einem Schleifwerkzeug (10),
• einen Abrichter (30) mit einem drehantreibbaren Abrichtwerkzeug (31),
• eine Steuerung (50) zum Steuern von Bewegungen des Abrichtwerkzeugs (31) relativ zu dem Schleifwerkzeug (10),
• eine Anschnitterkennung (51), die dazu ausgelegt ist eine Berührung des Schleifwerkzeugs (10) mit einem anderen Teil der Schleifmaschine (100) zu signalisieren,
gekennzeichnet durch die Schritte:
a. Steuern von Bewegungen des Abrichtwerkzeug (31) relativ zu dem Schleifwerkzeug (10), um das Abrichtwerkzeug (31) relativ zu dem Schleifwerkzeug (10) zuzustellen,
b. Prüfen, ob die Anschnitterkennung (51) eine Berührung des Schleifwerkzeugs (10) mit dem Abrichtwerkzeug (31) signalisiert,
c. Wiederholen der Schritte a. bis c. bis eine Berührung des Schleifwerkzeugs (10) mit dem Abrichtwerkzeug (31) signalisiert wurde,
d. falls eine Berührung des Schleifwerkzeugs (10) mit dem Abrichtwerkzeug (31) signalisiert wurde,
i. Festhalten der Ist-Position,
ii. Ausführen einer Kompensationsberechnung unter Verwendung der Ist-Position und einer Referenz- oder Soll-Position.

## Beschreibung

### Gebiet der Erfindung

Gegenstand der Erfindung sind ein Verfahren zum Kompensieren von temperaturbedingten Abweichungen in einer Schleifmaschine und entsprechend ausgestattete Schleifmaschinen.

### Hintergrund der Erfindung, Stand der Technik

Es gibt zahlreiche maschinelle Bearbeitungsverfahren, bei denen Schleifwerkzeuge eingesetzt werden. Vor allem im Bereich der Zahnradbearbeitung kommen Schleifwerkzeuge zum Einsatz, die abgerichtet werden können. Es gibt zum Beispiel Schleifscheiben, die nahezu tellerförmig sind, und es gibt topfförmige sowie kegelförmige Schleifscheiben. Typischerweise sind diese Schleifwerkzeuge mit einem Abrasivmaterial belegt, das speziell zum Abrichten (im Englischen "dressing" genannt) geeignet ist.

In Schleifmaschinen wird häufig zusätzlich zu dem Schleifwerkzeug ein Abrichtwerkzeug bereitgestellt, das bei Bedarf zum Einsatz kommt, um das Schleifwerkzeug abzurichten. Moderne Schleifmaschinen umfassen typischerweise ein rotationsangetriebenes Abrichtwerkzeug, das automatisch bahngesteuert zur Konturgebung und zum Abrichten des Schleifwerkzeugs eingesetzt wird.

Wenn es z.B. um das schleifende Bearbeiten von Verzahnungen geht, müssen die Arbeitsflächen des Schleifwerkzeugs nach einer gewissen Zeit erneut auf die gewünschte Form gebracht (profiliert) werden, um eine hinreichende Qualität der Verzahnung gewährleisten zu können.

Vorzugsweise kommt im Rahmen der Erfindung eine CNCbahngesteuerte Abrichtrolle oder -scheibe als Abrichtwerkzeug zum Einsatz. Das Abrichtwerkzeug kann aber auch dreh-antreibbar fest an dem Maschinenbett oder einer anderen feststehenden oder verfahrbaren Komponente der Maschine befestigt sein. Die für das Abrichten erforderliche Bahnsteuerung erfolgt in diesem Spezialfall dann über CNC-gesteuerte Bewegungen der Achsen, die das Schleifwerkzeug relativ zum Abrichtwerkzeug bewegen, während das Abrichtwerkzeug sich lediglich um die Abrichtachse dreht.

Voraussetzung zum Abrichten mit Abrichtwerkzeugen ist, dass zwischen Abrichtwerkzeug und Schleifwerkzeug eine relative Abricht(schleif)bewegung stattfinden kann. Das Abrichtwerkzeug kann sich in der gleichen oder in die entgegengesetzte Richtung drehen wie das abzurichtende Schleifwerkzeug. Das Geschwindigkeitsverhältnis zwischen Schleifwerkzeug und Abrichtwerkzeug ist bei rotierenden Abrichtwerkzeugen eine der Größen, die das Abrichtergebnis beeinflusst.

Die Form- und Profilabrichtprozesse unterliegen zahlreichen Einflussgrößen, die das Abrichten des Schleifwerkzeugs deutlich beeinflussen können.

Untersuchungen haben ergeben, dass es nach einer Unterbrechung eines Produktionsprozesses zu Ungenauigkeiten beim Schleifen von Werkstücken kommen kann. Detaillierte Analysen lassen darauf schließen, dass sich diese Ungenauigkeit aus temperaturabhängigen Veränderungen der Schleifmaschine ergeben. So hat eine Schleifmaschine im abgekühlten Zustand z.B. eine minimal andere Relativposition des Schleifwerkzeugs in Bezug zum Abrichtwerkzeug und/oder zum Werkstück als eine Schleifmaschine, die im Dauereinsatz eine höhere Eigentemperatur hat. Eine solche temperaturbedingt veränderte Relativposition kann sich auf die Genauigkeit des Abrichtens auswirken. D.h. das Schleifwerkzeug hat in diesem Fall nach dem Abrichten eine leicht veränderte Geometrie im Vergleich zur Soll-Geometrie.

Es ist hinlänglich bekannt, dass eine Bearbeitungsmaschine mit einem Koordinaten-Tastsensor ausgestattet werden kann, um während der Bearbeitung oder in Bearbeitungspausen z.B. das Werkstück vermessen zu können. Ein solcher Koordinaten-Tastsensor ist jedoch weder für das Vermessen des Abrichtwerkzeugs noch für das Vermessen des Schleifwerkzeugs geeignet. Ein Abrichtwerkzeug ist nämlich typischerweise mit polykristallinem oder Natur-Diamant belegt oder mit einem anderen Hartstoff beschichtet. Der Rubin-Taster eines Koordinaten-Tastsensors könnte beim Kontakt mit einem solchen Abrichtwerkzeug schnell zerstört werden. Die Schleifwerkzeuge sind weniger hart beschichtet als die Abrichtwerkzeuge, aber auch hier kann ein Koordinaten-Tastsensor beschädigt werden.

Es stellt sich daher die Aufgabe, eine Möglichkeit zu entwickeln, die es erlaubt in einer Schleifmaschine mit abrichtbarem Schleifwerkzeug zu erkennen, ob sich temperaturbedingte Veränderungen ergeben haben. Vorzugsweise soll ein Ansatz entwickelt werden, der sich in einer automatisierten Maschinenumgebung einsetzen lässt und der es ermöglicht eine detektierte temperaturbedingte Veränderung zu kompensieren.

Gemäss Erfindung wird ein Verfahren zum Kompensieren von temperaturbedingten Abweichungen in einer Schleifmaschine bereit gestellt, die umfasst
- eine drehantreibbare Werkzeugspindel mit einem Schleifwerkzeug,
- einen Abrichter mit einem drehantreibbaren Abrichtwerkzeug,
- eine (CNC-)Steuerung zum Steuern von Bewegungen des Abrichtwerkzeug relativ zu dem Schleifwerkzeug,
- eine Anschnitterkennung, die dazu ausgelegt ist eine Berührung des Schleifwerkzeugs mit einem anderen Teil der Schleifmaschine zu signalisieren.

Das Verfahren der Erfindung zeichnet durch die folgenden Schritte aus:
a. Steuern von Bewegungen des Abrichtwerkzeugs relativ zu dem Schleifwerkzeug, um das Abrichtwerkzeug relativ zu dem Schleifwerkzeug zuzustellen,
b. Prüfen, ob die Anschnitterkennung eine Berührung des Schleifwerkzeugs mit dem Abrichtwerkzeug signalisiert,
c. Wiederholen der Schritte a. bis c. bis eine Berührung des Schleifwerkzeugs mit dem Abrichtwerkzeug signalisiert wurde,
d. falls eine Berührung des Schleifwerkzeugs mit dem Abrichtwerkzeug signalisiert wurde,
   i. Festhalten der Ist-Position,
   ii. Ausführen einer Kompensationsberechnung unter Verwendung der Ist-Position und einer Referenz- oder Sollposition.

Bei allen Ausführungsformen der Erfindung kann ein Teil der Schritte zeitgleich oder zeitlich überlagert durchgeführt werden. Dies betrifft zum Beispiel die Schritte a. und b. sowie die Schritte d.i. und d.ii.

Die Anschnitterkennung wurde ursprünglich zum Erkennen der Berührung der Schleifscheibe mit dem Werkstück genutzt. Die Erfindung geht einen neuen Weg, indem die Anschnitterkennung zweckentfremdet eingesetzt wird. Dies ist möglich, da die Anschnitterkennung mittlerweile eine große Genauigkeit erreicht hat.

Vorzugsweise werden rechnerisch ausgeführte Koordinatentransformationen eingesetzt, um eine ermittelten Ist-Position in eine Aussage umzurechnen, die sich auf die aktuelle Position des Schleifwerkzeugs und/oder des Abrichtwerkzeugs innerhalb des Koordinatensystems der Schleifmaschine bezieht.

Eine Schleifmaschine gemäß Erfindung arbeitet auch im Falle von temperaturbedingten Veränderungen beim Abrichten genau, da sich stets die definierte Relativlage des Schleifwerkzeugs im Bezug zu dem Abrichtwerkzeug in der Schleifmaschine ermitteln lässt. Daher ist stets ein genauer Bezug gegeben, der im Rahmen der Erfindung vorteilhaft zum Einsatz kommt.

Gerade im Bereich der automatisierten Serienfertigung kann mit der Erfindung von Zeit zu Zeit oder je nach Bedarf eingegriffen werden, bevor durch eine Veränderung der Relativposition fehlerhafte Schleifwerkzeuge und mit diesen Schleifwerkzeugen nicht geeignete Zahnräder hergestellt werden.

Durch den Einsatz der Erfindung werden Schleifmaschinen wirtschaftlicher und die Bearbeitung kann unter Umständen noch genauer erfolgen als bisher.

Die Erfindung lässt sich vor allem in CNC-gesteuerten Spiralkegelrad-Schleifmaschinen oder auch beim Stirnradschleifen einsetzen.

Die Erfindung ermöglicht eine Verbesserung der Automatisierung des Abrichtprozesses und wiederholbare, höchste Genauigkeiten mit niedrigem Ausschussanteil.

Ein Verfahren der Erfindung ermöglicht es in der Maschine vorgegebene (programmierte) relative Abrichtbewegungen des Abrichtwerkzeugs durch Anwendung einer Kompensation anzupassen, damit trotz temperaturbedingter Veränderungen weiterhin optimal gearbeitet werden kann.

Bei allen Ausführungsformen muss während der Anschnitterkennung mindestens eines der beteiligten Elemente (z.B. das Schleifwerkzeug) drehangetrieben werden. Das jeweils andere beteiligte Element (z.B. das Abrichtwerkzeug) kann still stehen. Vorzugsweise werden während der Anschnitterkennung beide beteiligten Elemente (das Schleifwerkzeug und das Abrichtwerkzeug) drehangetrieben.

Teilweise sind die Schleifmaschinen mit einer Diamantabrichtrolle ausgestattet, die fest mit dem Maschinenbett verbunden ist, um so eine sehr gute Präzision zu erzielen. D.h. die Diamantabrichtrolle benötigt hier keine zusätzliche Maschinenachse (ausser der eigenen Rotationsachse). In einem solchen Fall wird je nach Ausführungsform das Schleifwerkzeug gegen die Diamantabrichtrolle bewegt, während diese sich dreht, um durch die erwähnte Anschnitterkennung temperaturbedingte Veränderungen zu erkennen und dann zu kompensieren.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1A**: zeigt eine schematische Seitenansicht eines Teils einer Schleifmaschine mit einem Schleiftopf, der im gezeigten Moment mittels einer Abrichtscheibe am Außenumfang abgerichtet wird;
- **FIG. 1B**: zeigt eine schematische Seitenansicht eines Teils der Schleifmaschine der Fig. 1A, wobei im gezeigten Moment eine relative Zustellung der Abrichtscheibe in Bezug zum Schleifwerkzeug vorgenommen wird;
- **FIG. 2**: zeigt eine vergrößerte schematische Seitenansicht eines Teils der Schleifmaschine der Fig. 1A, wobei im gezeigten Moment eine relative Abstandsgewinnung vorgenommen wird;
- **FIG. 3**: zeigt eine schematische Darstellung einer (Kegelrad-)Schleifmaschine mit Achsenbezeichnungen, wobei die Erfindung in dieser Schleifmaschine implementiert ist.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Sämtliche Figuren sind schematisch und nicht-maßstäblich.

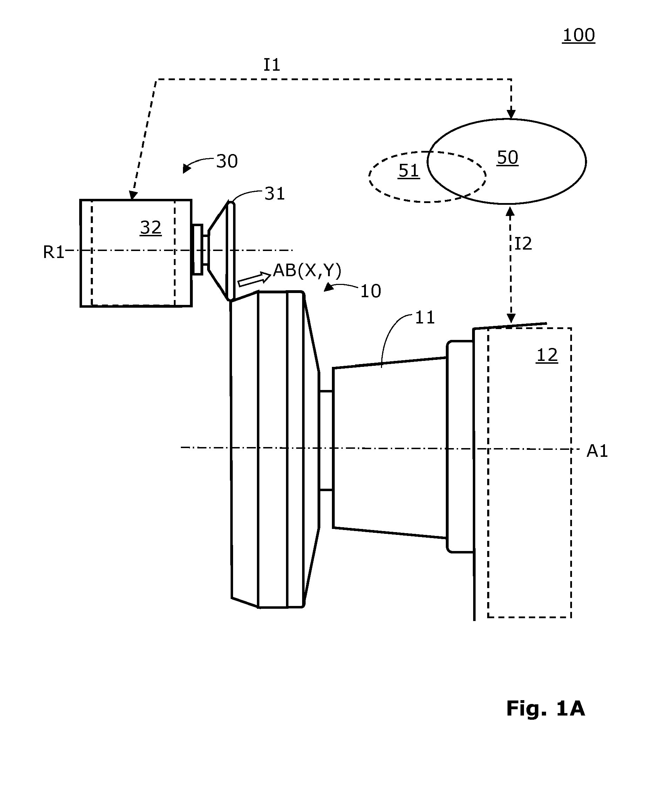

Das Prinzip der Erfindung wird im Folgenden anhand der stark vereinfachten Prinzipdarstellung der Fig. 1A beschrieben. Fig. 1A zeigt lediglich die wesentlichen Elemente einer Schleifmaschine 100 und die grundlegenden (Relativ-) Bewegungen dieser Elemente. Ein Werkstück ist in dieser Figur nicht gezeigt.

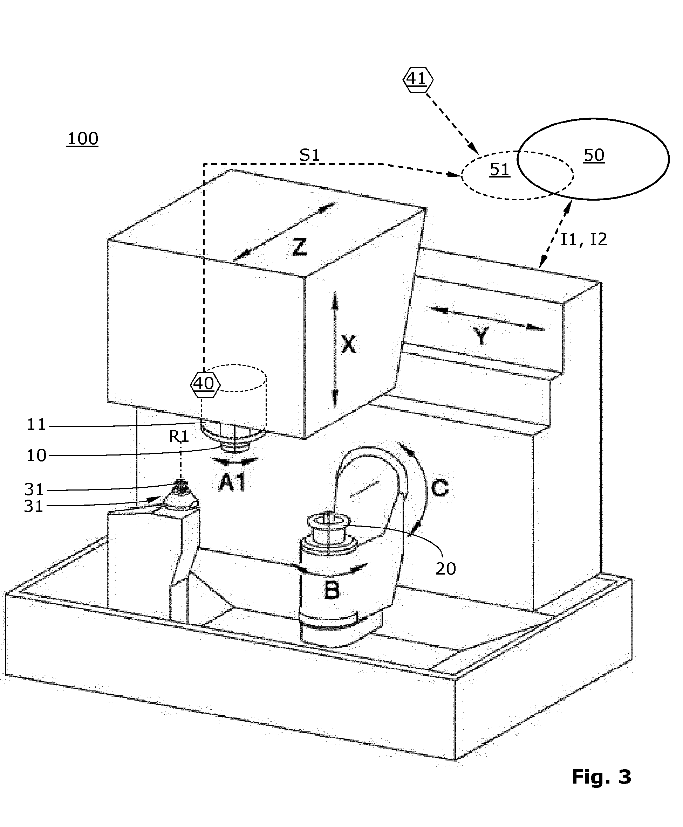

Es ist eine Seitenansicht einer beispielhaften Schleifscheibe 10 zu erkennen, die um eine Werkzeugachse A1 drehangetrieben werden kann. Die Schleifscheibe 10 sitzt an einer Werkzeugspindel 11, wie schematisch angedeutet. Ein Abrichter 30 mit einem Abrichtwerkzeug 31 (hier eine Form-Abrichtscheibe) ist neben der Schleifscheibe 10 gezeigt. Das Abrichtwerkzeug 31 kann um eine Abrichtachse R1 drehangetrieben werden. Um die Prinzipdarstellung der Fig. 1A nicht zu verkomplizieren, ist durch einen Blockpfeil AB(X,Y) angedeutet, dass das Abrichtwerkzeug 31 relativ zu der Schleifscheibe 10 entlang des Außenprofils der Schleifscheibe 10 (Abrichtbewegung genannt) bewegt werden kann. Die entsprechende Bewegung AB(X,Y) kann von dem Abrichtwerkzeug 31 oder der Schleifscheibe 10 oder von dem Abrichtwerkzeug 31 und der Schleifscheibe 10 gemeinsam durchgeführt werden. Daher ist hier von einer Relativbewegung die Rede. Die Bezeichnung AB(X,Y) deutet an, dass die Abrichtbewegung AB Bewegungsanteile parallel zu den X- und Y-Achsen der Schleifmaschine 100 umfasst (siehe auch Fig. 3).

Es geht bei der vorliegenden Erfindung um das Zustellen ZB des Abrichtwerkzeugs 31 relativ zu der Schleifscheibe 10. Der Begriff Zustellen wird hier für eine Relativbewegung verwendet, die es ermöglicht das Abrichtwerkzeug 31 mit der Schleifscheibe 10 in Kontakt zu bringen. Nach dem Ermitteln einer Kompensation werden gemäß Erfindung die Abrichtbewegungen AB, die ausgeführt werden, wenn das Abrichtwerkzeug 31 relativ zu der Schleifscheibe 10 bewegt wird, angepasst.

Das reguläre abrichtende Bearbeiten (durch das Ausführen der Abrichtbewegung AB) der Schleifscheibe 10 mit dem Abrichtwerkzeug 31 ist hinlänglich aus dem Stand der Technik bekannt. Normalerweise handelt es sich bei der Abrichtbewegung AB um eine CNC-gesteuerte Relativbewegung im dreidimensionalen Raum. Die entsprechenden Relativbewegungen werden durch eine CNC-Steuerung 50 vorgegeben und kontrolliert. In Fig. 1A ist eine CNC-Steuerung 50 in schematischer Form gezeigt. Eine schaltungstechnische Verbindung I1 verläuft von der CNC-Steuerung 50 zu einem Drehantrieb 32 des Abrichters 30 und eine schaltungstechnische Verbindung I2 verläuft von der CNC-Steuerung 50 zu einem Drehantrieb 12 des Schleifwerkzeugs 10. Die anderen Achsantriebe, die auch von der CNC-Steuerung 50 gesteuert werden, sind in Fig. 1A nicht gezeigt. Diese Achsantriebe dienen in bekannter Art und Weise dazu, die Abrichtbewegung AB und das Zustellen ZB auszuführen.

Die schaltungstechnischen Verbindungen I1 und/oder I2 sind durch Doppelpfeile dargestellt, da über diese Verbindungen I1 und/oder I2 sowohl die Antriebe 32 und/oder 12 angetrieben als auch Signale von diesen Antrieben 32 und/oder 12 an die CNC-Steuerung 50 geliefert werden. Durch das (Rück-)Senden von Signalen kann eine Regelung realisiert werden, die es ermöglicht Bewegungen zu kontrollieren (z.B. durch den Einsatz von Weggebern und/oder Winkeldekodern).

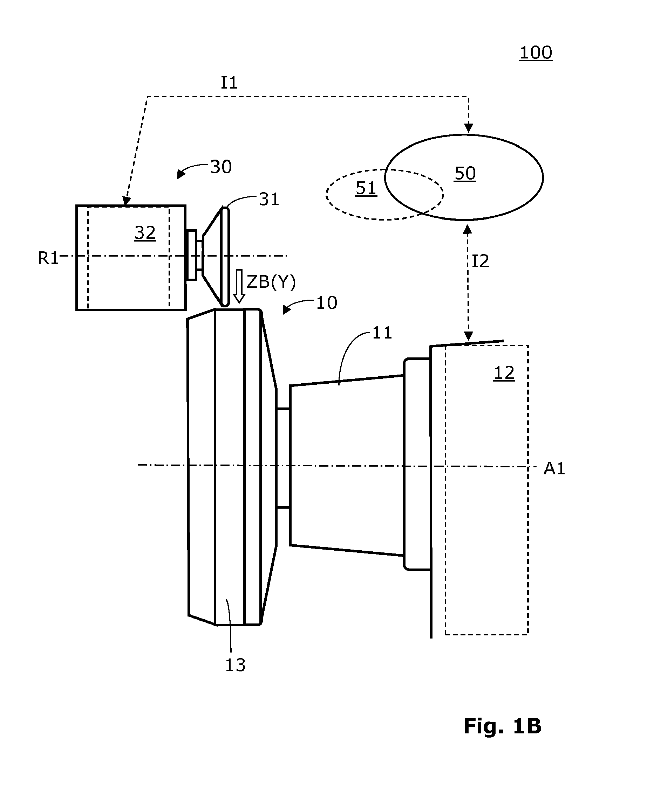

Fig. 1B zeigt wiederum einen Teil der Schleifmaschine der Fig. 1A, wobei im gezeigten Moment eine relative Zustellung ZB(Y) des Abrichtwerkzeugs 31 in Bezug zum Schleifwerkzeug 10 vorgenommen wird. Die relative Zustellung ZB(Y) ist in diesem schematisierten Beispiel bewusst so gerichtet, dass das Abrichtwerkzeug 31 das Schleifwerkzeug 10 am äußeren Umfang berührt. Die relative Zustellung ZB(Y) erfolgt in diesem Beispiel senkrecht zur Werkzeugachse A1, d.h. radial zum Schleifwerkzeug 10. Die Zustellung ZB(Y) erfolgt parallel zur Y-Achse (siehe auch Fig. 3) der Schleifmaschinen 100. Daher ist die Zustellbewegung in diesem Fall mit der Bezeichnung ZB(Y) versehen.

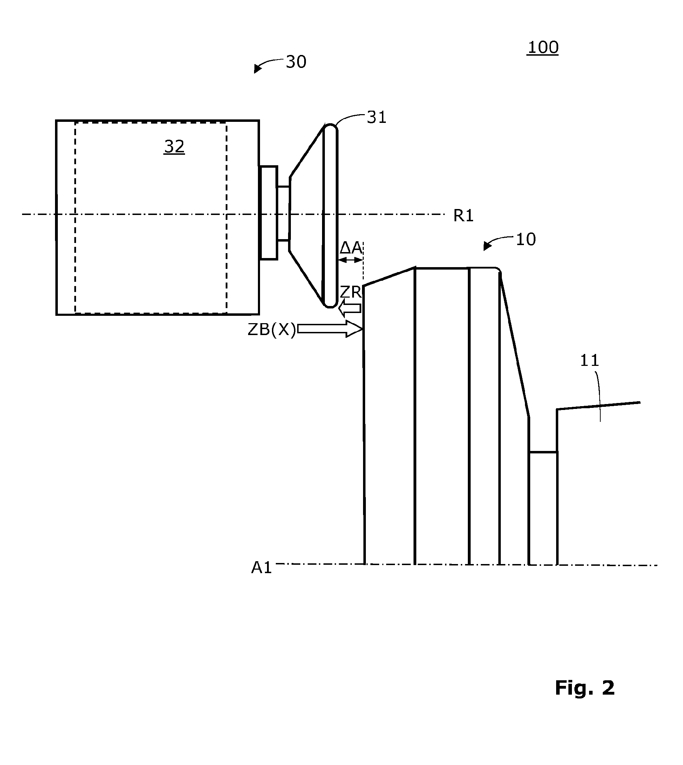

Die Berührung des Schleifwerkzeugs 10 erfolgt vorzugsweise bei allen Ausführungsformen in einem Bereich 13, der nicht zum schleifenden Bearbeiten eines Werkstücks eingesetzt wird. Der Bereich 13, der im gezeigten Beispiel für das Berühren ausgewählt wurde, ist ein ringförmiger Bereich am Außenumfang des Schleifwerkzeugs. Es können bei allen Ausführungsformen auch andere Bereiche des Schleifwerkzeugs 10 zum Berühren durch das Abrichtwerkzeug 31 ausgewählt werden (siehe z.B. Fig. 2).

Im Bereich der CNC-Steuerung 50 ist die Anschnitterkennung 51 als ein separates Modul gezeigt. Die Anschnitterkennung 51 kann bei allen Ausführungsformen ein Modul der CNC-Steuerung 50 sein, die Anschnitterkennung 51 kann bei allen Ausführungsformen aber auch ein Modul sein, das der CNC-Steuerung 50 zugeordnet bzw. mit dieser in Verbindung steht. Im einfachsten Fall umfasst das Modul zur Anschnitterkennung 51 einen Sensor, der ein Signal an die CNC-Steuerung 50 liefert, und Software, die in der CNC-Steuerung 50 die Verarbeitung des Signals und die Kompensationsberechnung(en) vornimmt.

Bei dem Ausführungsbeispiel der Figuren 1A und 1B erfolgt die Anschnitterkennung 51 durch ein Auswerten der Leistungsaufnahme des Antriebs 32 des Abrichters 30. In dem Moment, in dem es zu einer ersten leichten Berührung des Abrichtwerkzeugs 31 mit dem Schleifwerkzeug 10 kommt, erhöht sich aufgrund der Reibung zwischen Abrichtwerkzeug 31 und Schleifwerkzeug 10 die Leistungsaufnahme. Die Erhöhung der Leistungsaufnahme kann durch die Anschnitterkennung 51 verarbeitet, ausgewertet und signalisiert werden.

Sobald die Leistungsaufnahme beispielweise einen Schwellenwert übersteigt, geht die Anschnitterkennung 51 von einer Berührung des Schleifwerkzeugs 10 mit dem Abrichtwerkzeug 31. In diesem Fall signalisiert die Anschnitterkennung 51 das Vorliegen einer Berührung. Das Beispiel einer solchen Signalisierung ist in Fig. 3 gezeigt. Zeitgleich oder unmittelbar nach der Berührung wird die momentane Relativposition des Schleifwerkzeugs 10 und des Abrichtwerkzeugs 31 festgehalten. Diese Position wird hier als Ist-Position bezeichnet.

Je nach Ausführungsform der Erfindung, kann die Ist-Position mit einer Referenz- oder Soll-Position in Bezug gesetzt werden. Vorzugsweise wird die Ist-Position in einem Speicher der Schleifmaschine 100 festgehalten. Die Referenz- oder Soll-Position gibt beispielsweise die Position im 3D-Raum an, bei der es eigentlich zu einer Berührung zwischen Schleifwerkzeug 10 und Abrichtwerkzeug 31 hätte kommen müssen. Dadurch, dass die Ist-Position mit einer Referenz- oder Sollposition in Bezug gesetzt wird, kann die Schleifmaschine 100 die momentane Abweichung bzw. Lageveränderung (rechnerisch) ermitteln.

Anhand der Abweichung bzw. Lageveränderung kann durch die Schleifmaschine 100 dann eine Kompensation auf rechnerischen Wege vorgenommen werden, wie im Folgenden anhand eines einfachen Beispiels erläutert wird.

Die CNC-Steuerung 50 und/oder die Anschnitterkennung 51 führt eine relative Zustellbewegung ZB(Y) aus, um das Schleifwerkzeug 10 und das Abrichtwerkzeug 31 relativ zueinander in eine vorgegebene Referenz- oder Soll-Position zu bringen. Eigentlich müsste beim Erreichen der Referenz- oder Soll-Position die Anschnitterkennung 51 das Signal für eine Berührung liefern. Da es aufgrund einer Temperaturänderung der Schleifmaschine 100 zu einer Veränderung gekommen ist, findet eine gegenseitige Berührung jedoch erst nach dem Fortsetzen der Zustellbewegung in Richtung ZB(Y) statt. Zu der Berührung kommt es in diesem Beispiel erst 1 mm Wegstrecke später. D.h. die Ist-Position hat sich gegenüber der Referenz- oder Soll-Position um 1 mm verändert. Da im gezeigten Beispiel die Zustellbewegung ZB(Y) senkrecht zur Werkzeugachse A1 erfolgt, kann man aus der momentanen Ist-Position im Vergleich zur Referenz- oder Soll-Position ermitteln, wie nun die eigentlichen (Abricht-)Bewegungen AB(X,Y) auszuführen sind, um die Positionsveränderung zu kompensieren.

Der Werkzeugspindel 11, respektive deren Antrieb 12, ist typischerweise ein Wegsensor WS zugeordnet. Ein solcher Wegsensor WS sitzt nicht am vordersten Ende der Spindel 11 sondern z.B. im Bereich des Antriebs 12. Daher können temperaturbedingt Ausdehnungen oder Schrumpfungen der Spindel 11 und des Werkzeugs 10 nicht durch den Wegsensor WS erfasst werden. Das Verfahren der Erfindung bietet hier jedoch auf kostengünstige Art und Weise Abhilfe.

Es ist zu beachten, dass eine Ausführungsform wie in den Figuren 1A und 1B gezeigt, dazu geeignet ist Veränderungen in radialer Richtung zu erfassen. So kann z.B. eine Umfangsänderung des Schleifwerkzeugs 10 erfasst werden, da sich beim Ausdehnen der Werkzeugs 10 der ringförmige Bereich 13 am Außenumfang radial nach außen verlagert. In diesem Fall würde also eine Berührung früher (und nicht später, wie dies im beschriebenen Beispiel der Fall war) zustande kommen.

In den meisten Fällen ergeben sich temperaturbedingte Veränderungen jedoch hauptsächlich in Richtung der Werkzeugachse A1. Dies geschieht z.B. aufgrund einer Längenveränderung der Spindel 11. Um eine solche Veränderung erkennen und kompensieren zu können, sollte die Zustellbewegung ZB(X) so gerichtet sein, dass das Abrichtwerkzeug 31 das Schleifwerkzeug 10 an einer Fläche berührt, die in einer Ebene liegt, die senkrecht zur Werkzeugachse A1 liegt, oder die mindestens schräg zur Werkzeugachse A1 verläuft. Da die Zustellbewegung ZB(X) in dem in Fig. 2 gezeigten Beispiel parallel zur X-Achse verläuft, wird die Zustellbewegung mit ZB(X) bezeichnet.

Vorzugsweise wird bei allen Ausführungsformen nach dem Berühren ein Schritt ZR ausgeführt, um den relativen Abstand unmittelbar nach dem Berühren wieder zu vergrößern. Dieser Schritt ZR wird vorzugsweise bei allen Ausführungsformen automatisch ausgeführt und er wird daher als automatisierte Abstandsgewinnung bezeichnet. Die automatisierte Abstandsgewinnung wird durchgeführt, um unmittelbar nach einer Berührung des Schleifwerkzeugs 10 mit dem Abrichtwerkzeug 31 einen relativen Abstand ΔA des Schleifwerkzeugs 10 von dem Abrichtwerkzeug 31 einzustellen, wobei die absolute Größe |ΔA| des relativen Abstands ΔA vorzugsweise bei allen Ausführungsformen definiert ist. Der relative Abstand ΔA ist in Fig. 2 dargestellt.

Vorzugsweise hat der Schritt ZR bei allen Ausführungsformen eine Richtung, die der Richtung der Zustellbewegung ZB(X) entspricht, die soeben ausgeführt wurde. Das Vorzeichen der Bewegung des Schritts ZR ist umgekehrt wie das Vorzeichen der Zustellbewegung ZB(X).

Eine beispielhafte CNC-gesteuerte Spiralkegelrad-Schleifmaschine 100 ist in Fig. 3 gezeigt. Diese Schleifmaschine 100 weist eine vertikale Schleifspindel 11 (A1-Achse) mit einem Schleifwerkzeug 10 auf. Das zu bearbeitende Werkstück 20 sitzt auf der B-Achse. Links neben der Schleifspindel 11 ist stehend ein Abrichter 30 mit Abrichtwerkzeug 31 angeordnet. Das Abrichtwerkzeug 31 kann mittels seines Antriebs 32 (siehe z.B. Fig. 2) um die Abrichtachse R1 drehangetrieben werden. Die Schleifmaschine 100 umfasst weiterhin drei Linearachsen X, Y, Z mit diesen zugeordneten Antrieben, sowie eine Schwenkachse C, wie in Fig. 3 gezeigt.

Der Schwenkachse C ist auch ein Antrieb zugeordnet. Die verschiedenen Achsen, respektive deren Antriebe, werden von einer CNC-Steuerung 50 gesteuert, wie bereits erwähnt. Die CNC-Steuerung 50 samt der bereits erwähnten Anschnitterkennung 51 ist wiederum in schematischer Form neben der Maschine 100 gezeigt. Die schaltungstechnischen Verbindungen I1, I2 sind hier zusammengefasst, um anzudeuten, dass diese Verbindungen zum Beispiel über einen gemeinsamen Signalbus geführt werden können.

Die Erfindung ist in einer Schleifmaschine 100 vorzugsweise durch entsprechende Programmierung der CNC-Steuerung 50 und/oder der Anschnitterkennung 51 implementiert. Dadurch wird die Schleifmaschine 100 in die Lage versetzt die folgenden Schritte automatisch auszuführen:
a. Steuern von Bewegungen ZB (z.B. ZB(Y) oder ZB(X)) des Abrichtwerkzeugs 31 relativ zu dem Schleifwerkzeug 10, um das Abrichtwerkzeug 31 relativ zu dem Schleifwerkzeug 10 zuzustellen,
b. Prüfen, ob die Anschnitterkennung 51 eine Berührung des Schleifwerkzeugs 10 mit dem Abrichtwerkzeug 31 signalisiert,
c. Wiederholen der Schritte a. bis c. bis eine Berührung des Schleifwerkzeugs 10 mit dem Abrichtwerkzeug 31 signalisiert wurde,
d. falls eine Berührung des Schleifwerkzeugs 10 mit dem Abrichtwerkzeug 31 signalisiert wurde,
   i. Festhalten der Ist-Position,
   ii. Ausführen einer Kompensationsberechnung unter Verwendung der Ist-Position und einer Referenz- oder Soll-Position.

Es gibt im Prinzip drei Möglichkeiten, um die Anschnitterkennung 51 in einer Schleifmaschine 100 zu implementieren.

Die Anschnitterkennung 51 kann z.B. den Strom oder die Spannung eines Antriebs 12 des Schleifwerkzeugs 10 und/oder eines Antriebs 32 des Abrichtwerkzeugs 31 überwachen. Falls es zu einer Veränderung des Strom oder der Spannung kommt, die sich aus einer erhöhten Leistungsaufnahme des Antriebs 12 und/oder 32 ergibt, wird durch die Anschnitterkennung 51 eine Berührung signalisiert. Die erhöhte Leistungsaufnahme im Falle einer Berührung ist auf die Reibung zwischen dem Schleifwerkzeug 10 und dem Abrichtwerkzeug 31 zurück zu führen.

Die Anschnitterkennung 51 kann alternativ oder zusätzlich das Ausgangssignal eines Vibrationssensors 40 überwachen, um im Falle einer erhöhten Vibration eine Berührung zu signalisieren. Zu Zunahme der Vibration ergibt sich wiederum aus einer Berührung des Schleifwerkzeugs 10 mit dem Abrichtwerkzeug 31. Als Vibrationssensor 40 eignet sich für alle Ausführungsformen ein Beschleunigungssensor, der an der Schleifspindel und/oder an dem Abrichter 30 sitzt.

Die Anschnitterkennung 51 kann alternativ oder zusätzlich das Ausgangssignal eines akustischen Sensors 40 überwachen, um im Falle einer erhöhten Lautstärke eine Berührung zu signalisieren. Die Zunahme der Lautstärke ergibt sich wiederum aus einer Berührung des Schleifwerkzeugs 10 mit dem Abrichtwerkzeug 31. Als akustischer Sensor 40 eignet sich für alle Ausführungsformen ein Schall-Emissions-Hydrophon, ein Schallemissionsaufnehmer oder ein (piezoelektrischer) Körperschallsensor, das/der im Bereich der Schleifspindel und/oder des Abrichters 30 sitzt.

In Fig. 3 ist schematisch angedeutet, dass ein solcher Sensor 40 (z.B. ein akustischer Sensor, ein Leistungssensor oder ein Vibrationssensor) im Bereich der Werkzeugspindel 11 sitzen kann. Ein solcher Sensor 40 kann beispielsweise ein Signal S1 an die Anschnitterkennung 51 übermitteln, wie in Fig. 3 schematisch durch einen strichlierten Pfeil angedeutet.

Es gibt mittlerweile Systeme zur Anschnitterkennung 51, die eine sehr hohe Genauigkeit haben, die im Bereich von Mikromillimetern liegt. Die Genauigkeit ergibt sich einerseits aus der Empfindlichkeit des/der Sensoren und andererseits aus der Genauigkeit der Weg- und/oder Winkelauflösung, die zur Ermittlung der Ist-Position eingesetzt wird. Diese Genauigkeit ist für die vorliegende Erfindung wichtig, da sich temperaturbedingte Veränderungen auch im Bereich weniger Mikrometer abspielen.

Vorzugsweise werden bei allen Ausführungsformen unmittelbar nach dem Bereitstellen eines Signals S1, das eine Berührung anzeigt, die folgenden beiden Reaktionen ausgelöst:
- Festhalten der Ist-Position
- Ausführen der Abstandsgewinnung ZR.

Da die Steuerung 50 nicht nur Bewegungen vorgibt, sondern auch die Bewegungen überwacht (z.B. mittels sehr präzisen Wegsensoren), kennt die Steuerung 50 jederzeit die Positionen der bewegten Elemente. Im Falle einer Berührung kann somit durch das Festhalten oder Speichern der momentanen Position (Ist-Position genannt), eine Bezugsgröße für die anschließende Kompensationsberechnung vorgegeben werden.

Vorzugsweise wird das Ausführen der Schritte a. bis c. bei allen Ausführungsformen nur ausgelöst, wenn einer der folgenden Bedingungen erfüllt ist:
- nachdem die Schleifmaschine 100 während eines vordefinierten oder definierbaren Zeitraums nicht produktiv genutzt wurde, und/oder
- nachdem die Schleifmaschine 100 umkonfiguriert wurde, und/oder
- nachdem ein Umgebungssensor, vorzugsweise ein Temperatursensor, eine Änderung angezeigt oder ausgegeben hat.

Vorzugsweise wird bei allen Ausführungsformen aus Gründen der Verfahrenseffizienz das Ausführen der Schritte a. bis c. unmittelbar vor der Durchführen eines Abrichtprozesses ausgelöst.

Die Erfindung kann auch in anderen Schleifmaschinen implementiert werden.

**Bezugszeichen**

| | |
|---|---|
| Schleifwerkzeug | 10 |
| Werkzeugspindel | 11 |
| Antrieb | 12 |
| Bereich | 13 |
| Werkstück | 20 |
| Abrichter | 30 |
| Abrichtwerkzeug | 31 |
| Antrieb | 32 |
| Sensor | 40 |
| Umgebungssensor | 41 |
| Steuerung | 50 |
| (Modul zur) Anschnitterkennung | 51 |
| Schleifmaschine | 100 |
| relativer Abstand | ΔA |
| Betrag des relativen Abstands | \|ΔA\| |
| schaltungstechnische Verbindung | I1, I2 |
| Werkzeugachse | A1 |
| Werkstückachse | B |
| Schwenkachse | C |
| Abrichtachse | R1 |
| Wegsensor | WS |
| (Abricht-)Bewegung | AB |
| (Abricht-)Bewegung mit X- und Y-Anteilen | AB(X,Y) |
| Signal | S1 |
| Zustellen / Zustellbewegung | ZB |
| Zustellen bzw. Zustellbewegung parallel zur X-Achse | ZB(X) |
| Zustellen bzw. Zustellbewegung parallel zur Y-Achse | ZB(Y) |
| Schritt / Abstandsgewinnung | ZR |

## Patentansprüche

1. Verfahren zum Kompensieren von temperaturbedingten Abweichungen in einer Schleifmaschine (100), die umfasst
• eine drehantreibbare Werkzeugspindel (11) mit einem Schleifwerkzeug (10),
• einen Abrichter (30) mit einem drehantreibbaren Abrichtwerkzeug (31),
• eine Steuerung (50) zum Steuern von Bewegungen (AB, ZB, ZR) des Abrichtwerkzeugs (31) relativ zu dem Schleifwerkzeug (10),
• eine Anschnitterkennung (51), die dazu ausgelegt ist eine Berührung des Schleifwerkzeugs (10) mit einem anderen Teil der Schleifmaschine (100) zu signalisieren,
**gekennzeichnet durch** die Schritte:
a. Steuern von Bewegungen (ZB) des Abrichtwerkzeug (31) relativ zu dem Schleifwerkzeug (10), um das Abrichtwerkzeug (31) relativ zu dem Schleifwerkzeug (10) zuzustellen,
b. Prüfen, ob die Anschnitterkennung (51) eine Berührung des Schleifwerkzeugs (10) mit dem Abrichtwerkzeug (31) signalisiert,
c. Wiederholen der Schritte a. bis c. bis eine Berührung des Schleifwerkzeugs (10) mit dem Abrichtwerkzeug (31) signalisiert wurde,
d. falls eine Berührung des Schleifwerkzeugs (10) mit dem Abrichtwerkzeug (31) signalisiert wurde,
i. Festhalten der Ist-Position,
ii. Ausführen einer Kompensationsberechnung unter Verwendung der Ist-Position und einer Referenz- oder Soll-Position.

2. Verfahren nach Anspruch 1, **dadurch gekennzeichnet, dass** die Anschnitterkennung (51) den Strom oder die Spannung eines Antriebs (12) des Schleifwerkzeugs (10) und/oder eines Antriebs (32) des Abrichtwerkzeugs (31) überwacht, um bei einer Veränderung des Stroms oder der Spannung, die sich aus einer erhöhten Leistungsaufnahme des Antriebs (12, 32) ergibt, eine Berührung zu signalisieren.

3. Verfahren nach Anspruch 1 oder 2, **dadurch gekennzeichnet, dass** die Anschnitterkennung (51) ein Ausgangssignal (S1) eines Vibrationssensors (40) überwacht, um im Falle einer erhöhten Vibration eine Berührung zu signalisieren.

4. Verfahren nach Anspruch 1, 2 oder 3, **dadurch gekennzeichnet, dass** die Anschnitterkennung (51) ein Ausgangssignal (S1) eines akustischen Sensors (40) überwacht, um im Falle einer erhöhten Lautstärke eine Berührung zu signalisieren.

5. Verfahren nach einem der Ansprüche 1 bis 4, **dadurch gekennzeichnet, dass** das Ausführen der Schritte a. bis c. ausgelöst wird
- nachdem die Schleifmaschine (100) während eines vordefinierten oder definierbaren Zeitraums nicht produktiv genutzt wurde, und/oder
- nachdem die Schleifmaschine (100) umkonfiguriert wurde, und/oder
- nachdem ein Umgebungssensor (41), vorzugsweise ein Temperatursensor, eine Änderung angezeigt oder ausgegeben hat.

6. Verfahren nach einem der Ansprüche 1 bis 4, **dadurch gekennzeichnet, dass** das Ausführen der Schritte a. bis c. unmittelbar vor dem Durchführen eines Abrichtprozesses ausgelöst wird.

7. Verfahren nach einem der Ansprüche 1 bis 4, **dadurch gekennzeichnet, dass** der Schritt d. einen Schritt zur automatisierten Abstandsgewinnung (ZR) durchführt, um unmittelbar nach einer Berührung des Schleifwerkzeugs (10) mit dem Abrichtwerkzeug (31) einen relativen Abstand (ΔA) des Schleifwerkzeugs (10) von dem Abrichtwerkzeug (31) einzustellen, wobei die absolute Größe (|ΔA|) des relativen Abstands (ΔA) vorzugsweise definiert ist.

8. Schleifmaschine (100), die umfasst
• eine drehantreibbare Werkzeugspindel (11) mit einem Schleifwerkzeug (10),
• einen Abrichter (30) mit einem drehantreibbaren Abrichtwerkzeug (31),
• eine Steuerung (50) zum Steuern von Bewegungen des Abrichtwerkzeugs (31) relativ zu dem Schleifwerkzeug (10),
• eine Anschnitterkennung (51), die dazu ausgelegt ist eine Berührung des Schleifwerkzeugs (10) mit einem anderen Teil der Schleifmaschine (100) zu signalisieren,
**dadurch gekennzeichnet, dass** die Schleifmaschine (100) zum Ausführen der folgenden Schritte programmiert ist:
a. Steuern von Bewegungen (ZB) des Abrichtwerkzeugs (31) relativ zu dem Schleifwerkzeug (10), um das Abrichtwerkzeug (31) relativ zu dem Schleifwerkzeug (10) zuzustellen,
b. Prüfen, ob die Anschnitterkennung (51) eine Berührung des Schleifwerkzeugs (10) mit dem Abrichtwerkzeug (31) signalisiert,
c. Wiederholen der Schritte a. bis c. bis eine Berührung des Schleifwerkzeugs (10) mit dem Abrichtwerkzeug (31) signalisiert wurde,
d. falls eine Berührung des Schleifwerkzeugs (10) mit dem Abrichtwerkzeug (31) signalisiert wurde,
i. Festhalten der Ist-Position in einem Speicher der Schleifmaschine (100),
ii. Ausführen einer Kompensationsberechnung unter Verwendung der Ist-Position und einer Referenz- oder Soll-Position.

9. Schleifmaschine (100) nach Anspruch 8, **dadurch gekennzeichnet, dass** sie Mittel umfasst, die dazu ausgelegt sind das Ausführen der Schritte a. bis c. auszulösen
- nachdem die Schleifmaschine (100) während eines vordefinierten oder definierbaren Zeitraums nicht produktiv genutzt wurde, und/oder
- nachdem die Schleifmaschine (100) umkonfiguriert wurde, und/oder
- nachdem ein Umgebungssensor (41), vorzugsweise ein Temperatursensor, eine Änderung angezeigt oder ausgegeben hat.
